**Europäisches Patentamt**

**(19) European Patent Office**

**Office européen des brevets**

(11) Publication number : **0 425 524 B1**

# (12) EUROPEAN PATENT SPECIFICATION

(45) Date of publication of patent specification :
26.08.92 Bulletin 92/35

(51) Int. Cl.⁵ : **G01B 5/30, E21F 17/18**

(21) Application number : **89907254.0**

(22) Date of filing : **20.06.89**

(86) International application number :
**PCT/IT89/00045**

(87) International publication number :
**WO 90/01139 08.02.90 Gazette 90/04**

(54) **A SELF-CALIBRATING ELECTRONIC PRESSURE TRANSDUCER FOR LINED TUNNELS.**

(30) Priority : **19.07.88 IT 2141488**

(43) Date of publication of application :
**08.05.91 Bulletin 91/19**

(45) Publication of the grant of the patent :
**26.08.92 Bulletin 92/35**

(84) Designated Contracting States :
**AT CH DE FR GB IT LI**

(56) References cited :
**DE-A- 3 426 992**
**FR-A- 960 290**
**GB-A- 2 117 523**

(73) Proprietor : **CARGNEL, Gianangelo**
**Viale Fantuzzi, 8**
**I-32100 Belluno (IT)**

(72) Inventor : **CARGNEL, Gianangelo**
**Viale Fantuzzi, 8**
**I-32100 Belluno (IT)**

(74) Representative : **Dr. Ing. A. Racheli & C.**
**Viale San Michele del Carso, 4**
**I-20144 Milano (IT)**

## Description

The present invention relates to an electronic pressure transducer of the type used for example in tunnels to signal possible pressure variations of the body of rock on the civil engineering works.

The measurement of the stress acting on the tunnel linings is usually assigned to Gloetzl type hydraulic cells installed before the building work is carried out.

Installation when the tunnel is operational involves economic and technological burdens, which cause inconvenience for the user and do not guarantee the real measurement of the pressures on the structure, since reconstruction of the housing nog does not ensure homogeneity between this and the original building works; in addition, such cells are of necessity expendable since they are enclosed in the curtain wall concrete, so that the measuring point becomes unusuable in the case of deterioration of the facing.

The object of the present invention therefore is to create a pressure transducer which will transmit in a perfect way the value of the actual stress due to the rock, which will be easily inserted into and moved away from the workpiece, and which will also be such as not to require any work on the rock which might cause even locally the stress produced by the latter.

The aforesaid object has been attained by foreseeing a transducer comprising a rod whose ends rest one against the rock and the other against a charging cell, and which is further provided with an expander which makes the concrete civil engineering works integral with the charging cell as claimed in claim 1.

Preferably the charging cell comprises a demultiplier. Downstream of this a piezoelectric resistive bridge detector can be provided.

A preferred solution foresees in addition that the electronic circuit is fixed and integral with the said charging cell.

From what has been said above it will be evident how the proposed device allows measurement of the radial stress at the axis of the tunnel. The device is quick to install and does not require rebuilding work, since it only involves the making of a hole with a small diameter which goes through the lining and finishes inside the body of rock, for housing the transducer rod; in addition, it allows easy retrieval and possible substitution of the measuring equipment, which is outside the facing.

In order to position the transducer, so that it can measure the pressure exerted by the rock, it is sufficient to make a hole with a diameter substantially equal to that of the rod, thus to insert the latter therein and press it to the bottom of the hole with adjustable preloading value, by bringing near and moving away the charging cell, supported by the unit made integral to the concrete works.

Since the rock is a rigid body which stresses the lining with micro-shifts, the transducer puts into relation two fixed points of the respective masses quantifying the forces acting along the connecting axis represented by the rod which, resting on the sensitive surface of the charging cell, transforms such forces into a pressure which opposes the activated stress with equal value; this pressure is transmitted to the piezoelectrical detector which actuates the conversion of the reaction into an electronic quantity processable by the computerized instrumentation.

The invention will now be explained with reference to an exemplary embodiment which is illustrated in the enclosed drawings, in which:

Figure 1 is a diagrammatic view of a section of a tunnel in which three transducers according to the present invention have been mounted;

Figure 2 is a section of the transducer.

As can be seen in the figures, the proposed transducer consists of a telescopic rod 1 which has for example a body 1c, with a diameter of 35 mm with a bearinghead 1a in the rock, the body 1c being connected by being screwed to a portion 1b of gauged stainless steel with, for example, a diameter of 16 mm. This portion has a free hemispherical end 3 suitable for pressing on Belleville washers 14, which act on a movable plate 4 forming the input area for a charging cell 20. The distance existing between the head 1a and the end 3 can be regulated at assembly by screwing down or unscrewingm the portion 1b with respect of the body 1c bearing the head 1a.

The cell 20 consists of a body 21 which, when assembly is completed, will be locked in an adjustable way to the concrete works 13, as will be described later.

On the inside the cell 20 has two diaphragms M which enclose a hydraulic chamber 5. When the diaphragms M are moved a demultiplier 6 with a 1/10 ratio is actuated, which acts on a further diaphragm P with a large diameter which defines a second hydraulic chamber 7, having an outlet into which an electronic piezoelectric pressure detector is inserted, indicated with reference number 8.

A threaded pipe 12 integral with the block 11 which contains the Belleville washers 14, acting on the movable plate 4 is provided externally the portion 1b of the rod 1. The block 11 is provided with a hole 11a into which the end 3 of the rod can enter. The block is fastened to the body 21 of the cell 20 by means of bolts which are not shown. Onto the externally threaded pipe 12 a conical nog 31 is screwed, which extends outwards with a hollow externally threaded pin 31a onto which a conical ring 32 slides. The said ring 32 is in contact with a washer 34, which is in contact with a nut 35 which screws onto the hollow threaded pin 31a. Onto the block 31 and the ring 32, which are both conical in such a way that their respective apexes are facing, expander members 2 are located in the shape of sectors, which are formed in such a way as to lock against the civil engineering works 13 every time that the two conical surfaces of the block 31 or the ring 32 respectively move towards each other. The expander members 2 are held back, when at rest, on the nog 31 and the ring 32 by the O-ring 33. Screwing down the nut 35 causes washers 34 and the conical ring 32 to move, and go towards the block, causing the expansion of the expansion organs 2, which lock the cell to the concrete works 13.

The externally threaded pipe 12, integral with the block 11 which is anchored to the cell 20, is screwed onto the nog 31; this allows the adjustment of the Belleville washers 14 in contact with the hemispherical end 3 of the rod, permitting preloading of the same, so as to allow the cell 20 to monitor not only phenomena of positive stress but also of ground sink on the concrete works 13.

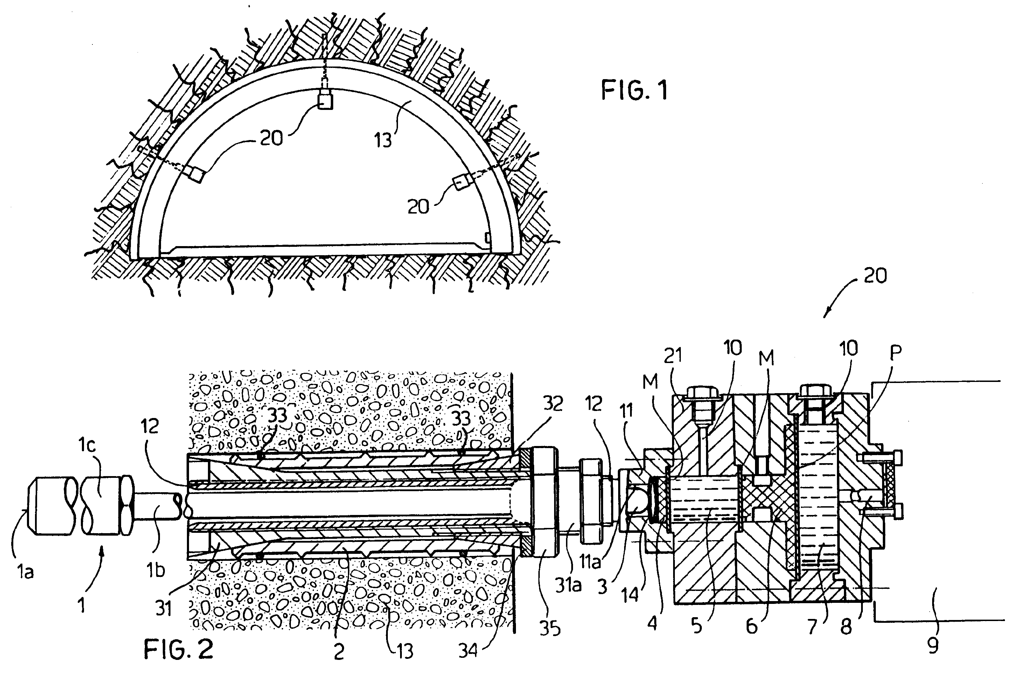

The chambers 5 and 7 have stoppers 10 for filling with degassed, dehumidified oil The proposed transducer will be mounted for example in a tunnel (figure 1) by making a 35 mm hole for a length for example of 1 m; then the first part of the hole will be widened to 50 mm for about 20 cm. The proposed device will be introduced with the expander closed and the nut 35 will be acted upon to lock the expander to the works 13. The initial adjustment of the transducer is carried out as follows:

By screwing down or unscrewing the body 1c of the rod with respect to the portion 1b of the same, the projection of the end 3 of the rod 1 with respect to the hollow pin 31a is preset at a millimetre tolerance. The cell 20 integral with the pipe 12 is screwed into the nog 31. This screwing down brings the end 3 of the rod 1 in contact with the Belleville washers 14.

By rotating the cell 20 clockwise or anticlockwise on its longitudinal axis the washers 14 are wound more or less, and they generate pressure in the chambers 5 and 7. By measuring the pressure value in chamber 7 by means of the piezoelectric detector 8 and the electronic apparatus connected to it, the reference pressure is set in the work zone. From this moment it is possible to quantify the variation of pressure on the transducer.

A temperature compensated analogue-digital conversion electronic circuit 9 is foreseen integral with the cell, having a transmission buffer on a three-pole line which transmits the data to a computer.

The thermal expansion of the rod is regenerated by a series of Belleville washers 14 positioned between the end 3 of the rod and the movable plate 4. It is immediately compensated by the electronic circuit of the sensor and by the computerized processing of the measuring instrument which obviously comprises a thermometer.

Preferably the pressure transducer is equipped with a power driver for piloting a multipolar line for data transmission, with the standard communication certificate for the CLIOS SET computer line, interfaceable with the local and remote automatic operating system.

## Claims

1. A pressure transducer, for use in concrete civil engineering works, particularly in tunnels to measure rock movements with respect to the concrete civil engineering works (13), by means of the axial displacement of a rod (1) inserted in a hole made in the rock through the concrete works (13), characterized in the rod (1) being arranged so that one end (1a) can be forced against the end of said hole, while the other end (3) of the rod (1) acts against a load cell (20), and expander unit means (31, 32, 2) to make said load cell integral with the works (13).

2. A transducer according to claim 1, characterized in that the load cell (20) comprises a demultiplier (5, 7).

3. A transducer according to the claim 1 or 2, characterized in that a bunch of Belleville washers (14) is interposed between the end (3) of the rod (1) and the load cell (20).

4. A transducer according to any one of the previous claims, characterized in that the load cell (20) comprises a piezoelectric resistive bridge detector.

5. A transducer according to any one of the previous claims, characterized in that the load cell (20) is fastened in an adjustable way to the concrete works (13).

6. A transducer according to claim 5, characterized in that the cell (20) is provided with a pipe (12) integral with it, which is screwed to the expander unit (31, 32, 2).

## Patentansprüche

1. Druckumsetzer, der bei Betonbauten, im besonderen bei Tunnels, anzuwenden ist, zur Abmessung - durch die Axialverschiebung eines Staubes (1), der in ein ins Gestein durch den Betonbau (13) hindurch gebohrtes Loch eingeführt wird - der gegenüber dem Betonbau (13) auftretenden Gesteinbewegungen, dadurch gekennzeichnet, daß der Stab (1) derart angeordnet ist, daß ein Ende (1a) gegen die Endwand des o.e. Loches eingepreßt werden kann, während das andere Ende (3) des Stabes (1) gegen eine Belastungszelle (20) wirkt und daß eine Spannmittelgruppe (31, 32, 2) vorgesehen ist, womit die o.e. Belastungszelle am Bau (13) festgemacht wird.

2. Druckumsetzer nach Anspruch 1, dadurch gekennzeichnet, daß die Belastungszelle (20) ein Untersetzungsgetriebe (5, 7) umfaßt.

3. Druckumsetzer nach Anpruch 1 oder 2, dadurch gekennzeichnet, daß ein Tellerfederpaket (14) zwischen dem Ende (3) des Stabes (1) und der Belastungszelle (20) gelagert ist.

4. Druckumsetzer nach irgendeinem der vorhergehenden Ansprüche, dadurch gekennzeichnet, daß die Belastungszelle (20) einen piezoelektrischen Widerstandsbrückenaufnehmer umfaßt.

5. Druckumsetzer nach irgendeinem der vorhergehenden Ansprüche, dadurch gekennzeichnet, daß die Belastungszelle (20) am Betonbau (13) verstellbar befestigt ist.

6. Druckumsetzer nach Anspruch 1, dadurch gekennzeichnet, daß die Zelle (20) mit einem daran festen Rohr (12) versehen ist, das an die Spannmittelgruppe (31, 32, 2) eingeschraubt wird.

**Revendications**

1. Transducteur de pression, à utiliser dans des ouvrages en béton, en particulier dans les tunnels, pour mesurer les mouvements rocheux par rapport à l'ouvrage en béton (13), au moyen du déplacement axial d'une tige (1) introduite dans un trou réalisé dans la roche à travers l'ouvrage en béton (13), caractérisé en ce que la tige (1) est placée de telle façon qu'une extrémité (1a) peut être forcée contre le fond dudit trou, tandis que l'autre extrémité (3) de la tige (1) agit contre une cellule de charge (20), et qu'un groupe expanseur (31, 32, 2) est prévu pour rendre ladite celule de charge solidaire de l'ouvrage (13).

2. Transducteur selon la revendication 1, caractérisé en ce que la cellule de charge (20) compend un démultiplicateur (5, 7).

3. Transducteur selon la revendication 1 ou 2, caractérisé en ce que entre l'extrémité (3) de la tige (1) et la cellule de charge (20) est placé un paquet de ressorts à godets (14).

4. Transducteur selon n'importe laquelle des revendications précédentes, caractérisé en ce que la cellule de charge (20) comprend un releveur piézo-électrique à pont résistif.

5. Transducteur selon n'importe laquelle des revendications précédentes, caractérisé en ce que la cellule de charge (20) est fixée de façon réglable à l'ouvrage en béton (13).

6. Transducteur selon la revendication 5, caractérisé en ce que la cellule (20) est munie d'un tube (12), qui lui est solidaire, et qui est vissé au groupe expanseur (31, 32, 2).

FIG. 1

FIG. 2

EP 0 425 524 B1